# EUROPÄISCHE PATENTSCHRIFT

(11) **EP 2 034 211 B1**
(45) Veröffentlichungstag und Bekanntmachung des Hinweises auf die Patenterteilung: **18.04.2012**
(21) Anmeldenummer: 08162877.8
(22) Anmeldetag: 25.08.2008
(51) Int. Cl.: F16F 9/32

(54) **Kolben-Zylinderaggregat mit einem Kolbenstangenschutz**
Piston-cylinder device with piston rod protection
Dispositif de cylindre à piston doté d'une protection des tiges de piston

(30) Priorität: 07.09.2007 DE 102007042809
(43) Veröffentlichungstag der Anmeldung: 11.03.2009
(73) Patentinhaber: ZF Friedrichshafen AG, 88038 Friedrichshafen (DE)
(72) Erfinder: Memmel, Alfred, 97453 Schonungen (DE); Nowotka, Thomas, 97539 Wonfurt (DE)

(56) Entgegenhaltungen:
- DE-B3-102005 008 045
- DE-U1- 7 720 172

## Beschreibung

Die Erfindung betrifft ein Kolben-Zylinderaggregat mit einem Kolbenstangenschutz gemäß dem Oberbegriff von Patentanspruch 1 (s. zum Beispiel die DE 10 2005 008 045 B3).

Im Produktionsablauf eines Schwingungsdämpfers werden zeitlich parallel Baueinheiten montiert, die in der Endstufe eine Kolbenstange mit Kolben und Anschlussorgan und in einer weiteren Baueinheit die zylinderseitigen Bauteile umfasst. Ein Schutzbalg oder ein Schutzrohr als Kolbenstangenschutz soll in der zeitlichen Abfolge möglichst spät montiert werden, da dieses Bauteil z. B. das Lackieren des Zylinders erschwert. Des Weiteren ist die automatisierte Handhabung einer Kolbenstange mit Schutzrohr komplizierter. Deshalb strebt man Kolbenstangenschutzeinrichtungen an, die sich auch bei vorhandenem kolbenstangenseitigen Anschlussorgan montieren lassen.

Aus der o.g. DE 10 2005 008 045 B3 ist ein Kolben-Zylinderaggregat mit einem Schutzrohr bekannt, das sich auch bei vorhandenem Anschlussorgan montieren lässt. Das Schutzrohr verfügt in seinem Boden über eine rechteckige Durchgangsöffnung, die der projizierten Fläche des Anschlussorgans in der Draufsicht in Richtung einer kolbenstangenseitigen Tragscheibe angepasst ist. Bei der Montage wird das Schutzrohr über das Anschlussorgan auf die Tragscheibe gefädelt und durch eine Drehbewegung zwischen dem Anschlussorgan und der Tragscheibe verriegelt. Diese Lösung ist leider nur bei einem Anschlussorgan als Ringlager verwendbar. Außerdem muss der Abstand zwischen dem Ringlager und der Tragscheibe sehr genau eingehalten werden, damit für das Schutzrohr kein Axialspiel vorliegt.

Aus der DE 71 11 581 U ist ein Schwingungsdämpfer bekannt, an dessen Kolbenstange eine Tragscheibe befestigt ist, die mindestens eine fensterförmige Aussparung aufweist. In diese Aussparung kann ein Vorsprung einer Deckscheibe des Schutzrohres im Sinn einer Verdrehsicherung eingreifen. Axialkräfte auf das Schutzrohr werden von einer Einschnürung bzw. einem Rand des Schutzrohres auf einen Flansch der Tragscheibe übertragen. Die Einschnürung am Schutzrohr ist vollständig umlaufend ausgeführt, so dass die Winkelstellung des Schutzrohres zur Tragscheibe der Kolbenstange keinen Einfluss auf die Axialsicherung des Schutzrohres ausübt. Bei einem festgeschweißten Anschlussorgan beliebiger Bauart ist dieses Schutzrohr nicht montierbar, da die Durchgangsöffnung für die Kolbenstange kein Ringlager aufnehmen könnte.

Die DE 19 51 754 U betrifft eine Schutzeinrichtung für eine Kolbenstange eines Schwingungsdämpfers, die eine Tragscheibe mit einem in Richtung des Zylinders weisenden Rand aufweist. Der Rand verfügt über fensterförmige Aussparungen oder über einen in Richtung der Längsachse der Schutzeinrichtung weisenden Vorsprung, der mit dem Rohrkörper der Schutzreinrichtung eine Formschlussverbindung bildet.

Aufgabe der vorliegenden Erfindung ist es, für ein Kolben-Zylinderaggregat eine Schutzeinrichtung zu realisieren, die auch bei bereits vorhandenem Anschlussorgan beliebiger Bauart nachträglich montiert werden kann.

Erfindungsgemäß wird die Aufgabe dadurch gelöst, dass die Tragscheibe zwischen der Ober- und Unterseite ein Wellenprofil aufweist, so dass der Kolbenstangenschutz über die Innenseite des Bodens mit auf der Oberseite und mit mindestens einer in Richtung der Unterseite der Tragscheibe weisende Anlagefläche verspannt wird.

Ein wesentlicher Vorteil der Erfindung besteht darin, dass eine Tragscheibe ohne einen umgebogenen Rand verwendet werden kann. Des Weiteren steht mit dem Boden eine sehr große und stabile Stütz- und Führungsfläche für den Kolbenstangenschutz zur Verfügung. Mit der rotatorischen Verriegelung wird eine Öffnung der Formschlussverbindung zwischen der Tragscheibe und dem Kolbenstangenschutz verhindert.

Die Anlagefläche ist auf mindestens einem Spannhaken ausgeführt. Der Spannhaken verläuft in einer Schrägstellung zur Kolbenstangenlängsachse und wird Abhängig von der Tiefe der Welle mehr oder weniger stark vorgespannt.

In weiterer vorteilhafter Ausgestaltung der Erfindung ist ein äußerer Rand der Tragscheibe mit mindestens einer Aussparung zur Aufnahme eines Spannhakens des Kolbenstangenschutzes ausgeführt. Der Kolbenstangenschutz kann ohne zusätzliche Montagekräfte in eine Montagestartposition gebracht werden.

Die Montagestartposition der Kolbenstangenschutzeinrichtung wird unabhängig von der Form der Durchgangsöffnung im Boden für ein kolbenstangenseitiges Anschlussorgan dadurch definiert, indem der Boden einen in Radialrichtung der Kolbenstangenschutzreinrichtung freigeschnittenen zungenförmigen Bereich aufweist, der mit einem Verriegelungsprofil der Tragscheibe zusammenwirkt.

Gemäß einem vorteilhaften Unteranspruch weist das Verriegelungsprofil die Montagestartposition und in einer dazu in Umfangsrichtung versetzten Winkelstellung eine Verriegelungsposition für den zungenförmigen Bereich auf.

Die Montagestartposition soll mit einem Minimum an Aufwand erreichbar sein. Deshalb ist das Verriegelungsprofil im Bereich der Montagestartposition in Umfangsrichtung spielbehaftet und in axialer Richtung ausgeführt. Ohne axiale Vorspannkräfte kann das Schutzrohr in die Montagestartposition auf die Tragscheibe gefädelt werden.

Die Montagestartposition und die Verriegelungsposition innerhalb des Verriegelungsprofils werden dadurch bestimmt, indem das Verriegelungsprofil eine äußere mäanderförmig verlaufende Grundlinie aufweist.

Des Weiteren ist vorgesehen, dass das Verriegelungsprofil von der Grundlinie kegelstumpfförmig in Richtung des Anschlussorgans ausgeführt ist. Die Mantelfläche des Kegelstumpfes zentriert den zungenförmigen Bereich des Bodens in der Verriegelungsposition. Zusätzlich wird ein gewünschter Widerstand bei der Verdrehbewegung von der Montagestartposition in die Verriegelungsposition erzielt.

Die Tragscheibe ist im Bereich einer oberen Deckfläche des Kegelstumpfes mit der Kolbenstange verbunden. Abgesehen von der Durchgangsöffnung für die Kolbenstange weist die Tragscheibe innerhalb ihres Randes keine weiteren Öffnungen auf, so dass das Eindringen von Schmutz über die Tragscheibe verhindert wird.

Anhand der folgenden Figurenbeschreibung soll die Erfindung näher erläutert werden.

Es zeigt.
- Fig. 1 u. 2: Kolbenstangenschutzeinrichtung in einer Montagestartposition
- Fig. 3: Tragscheibe eines Kolben-Zylinderaggregats nach Fig. 1 oder 2
- Fig. 4: Schnittdarstellung durch ein Kolben-Zylinderaggregat nach Fig. 2
- Fig. 5: Draufsicht des Kolben-Zylinderaggregat in der Verriegelungsposition
- Fig. 6 - 8: Verriegelungsposition im Detail

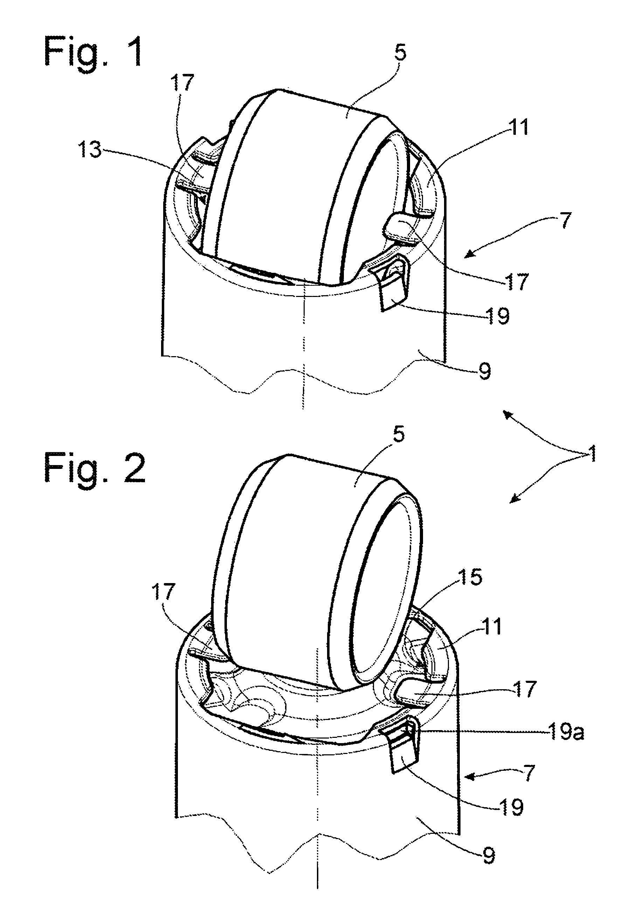

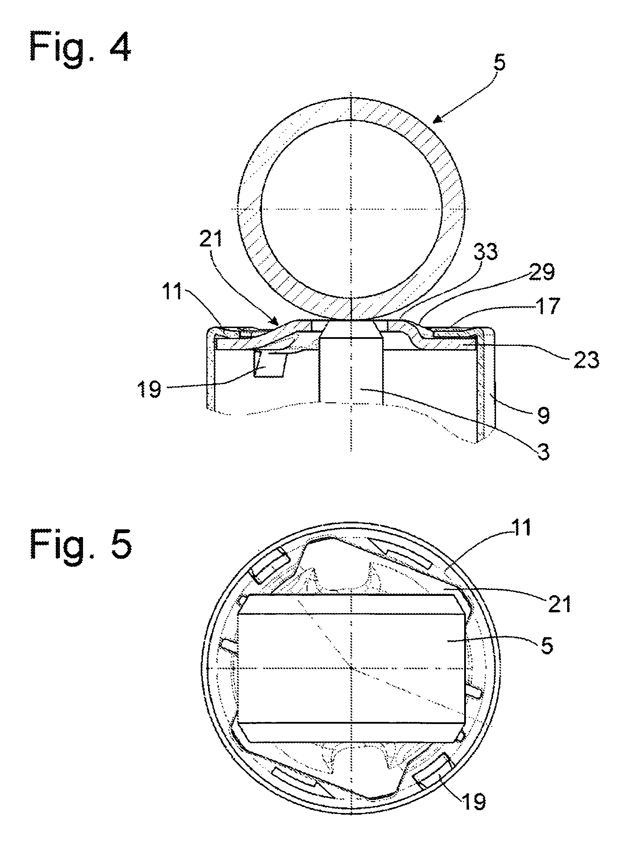

Die Figuren 1 und 2 zeigen einen Abschnitt eines beliebigen Kolben-Zylinderaggregats 1, an dessen Kolbenstange 3, dargestellt in den Figuren 4; 5; ein Anschlussorgan 5 in der Bauform eines Ringlagers befestigt ist. Ein Kolbenstangenschutz 7 hüllt zumindest einen Teil der Kolbenstange 3 ein. Der Kolbenstangenschutz 7 umfasst einen Rohrkörper 9, der starr oder flexibel als Schutzbalg ausgeführt sein kann. Endseitig schließt sich dem Rohrkörper 9 ein Boden 11 an. Bevorzugt ist der gesamte Kolbenstangenschutz aus Kunststoff gefertigt.

Der Boden 11 verfügt über eine Durchgangsöffnung 13 für das Anschlussorgan 5. Dafür ist die Durchgangsöffnung 13 entsprechend der Projektion des Anschlussorgans 5 in Richtung der Kolbenstange 3 im Wesentlichen rechteckig ausgeführt. Am Rand 15 der Durchgangsöffnung 13 sind zwei in Radialrichtung der Kolbenstangenschutzeinrichtung freigeschnittene zungenförmige Bereiche 17 ausgeführt.

Des Weiteren ist in der Fig. 2 ein Spannhaken 19 dargestellt, der im Übergangsbereich des Rohrkörpers 9 zum Boden 11 von einer vertikal verlaufenden sickenförmigen Profilierung in Verbindung mit einem kleinen Fenster 19a am oberen Auslauf gebildet wird und der in einer Schrägstellung zum Rohrkörper nach radial innen ausgerichtet ist. Der Spannhaken 19 ist in Umfangsrichtung nicht freigeschnitten.

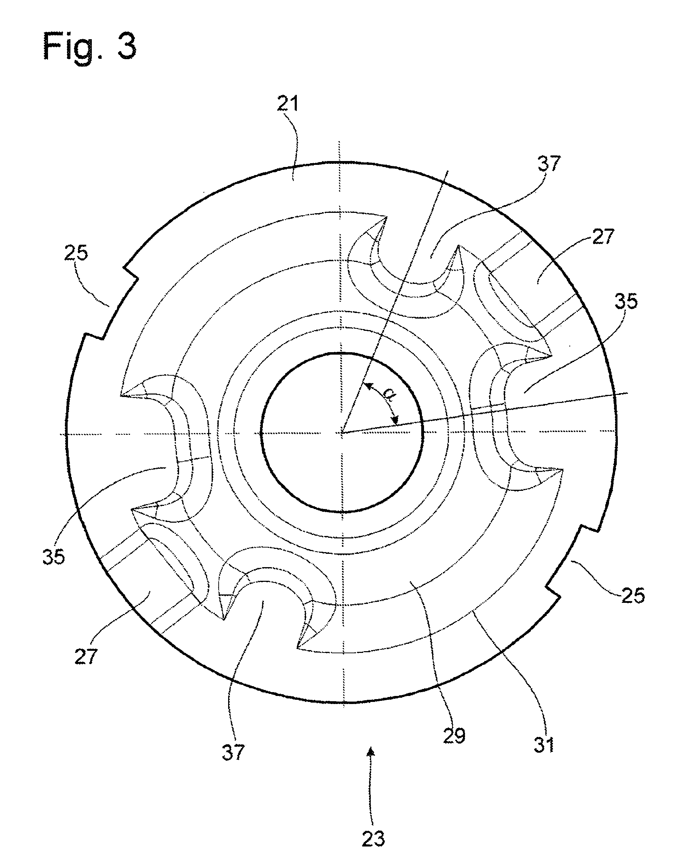

Die Figur 3 zeigt eine Draufsicht einer Oberseite 21 von einer Tragscheibe 23, die an der Kolbenstange 3 befestigt ist. An ihrem äußeren Rand ist die Tragscheibe 23 mit mindestens einer Aussparung 25 zur Aufnahme eines Spannhakens 19 ausgeführt. Des Weiteren verfügt die Tragscheibe 23 an ihrem Außenumfang über ein Wellenprofil 27 zwischen ihrer Ober- und Unterseite, das in die Tragscheibe in Gegenrichtung zum Anschlussorgan 5 eingeprägt ist. Aus der Zusammenschau der Figuren 4 und 3 ist erkennbar, dass die Tragscheibe 23 eine weitere Profilierung mit einer äußeren mäanderförmigen Grundlinie 31 aufweist, wobei sich die Profilierung ausgehend von der Grundlinie kegelstumpfförmig in Richtung des Anschlussorgans 5 erstreckt. Die Tragscheibe 23 ist, wie die Fig. 4 zeigt, im Bereich einer oberen Deckfläche 33 des Kegelstumpfes mit Anschlussorgan 5 verbunden.

Die Profilierung 29 der Tragscheibe 23 stellt ein Verriegelungsprofil dar, das mit den Aussparungen 25 und dem Wellenprofil 27 zusammenwirkt. Das Verriegelungsprofil verfügt über mindestens einen ersten radialen Rücksprung 35, dessen Breite in Umfangsrichtung größer ist als die Breite des zungenförmigen Bereichs 17 am Boden 11 des Kolbenstangenschutzes 7 und somit spielbehaftet ausgeführt ist. Um einen definierten Montagewinkel α in Umfangsrichtung weist die kegelstumpfförmige Profilierung 29 der Tragscheibe 23 jeweils einen weiteren radialen Rücksprung 37 für eine Verriegelungsposition des zungenförmigen Bereichs 17 auf.

Bei der Montage wird der Kolbenstangenschutz 7 gemäß den Figuren 1 und 2 auf die Tragscheibe 23 gefädelt, wobei die Form der Durchgangsöffnung 13 in Verbindung mit dem Anschlussorgan 5 die grobe Ausrichtung des Kolbenstangenschutzes 7 in Umfangsrichtung zur Tragscheibe 23 bewirkt. In der Figur 2 liegt der Boden 11 des Kolbenstangenschutzes 7 mit seiner Innenseite auf der Oberseite 21 der Tragscheibe 23 auf, wobei die zungenförmigen Bereiche 17 des Bodens 11 in die radialen Rücksprunge 35 der kegelstumpfförmigen Profilierung 29 eingreifen und damit die Montagestartposition des Kolbenstangenschutzes definieren. Dabei greifen die entspannten Spannhaken 19 in die Aufnahmen 25 der Tragscheibe 23 ein.

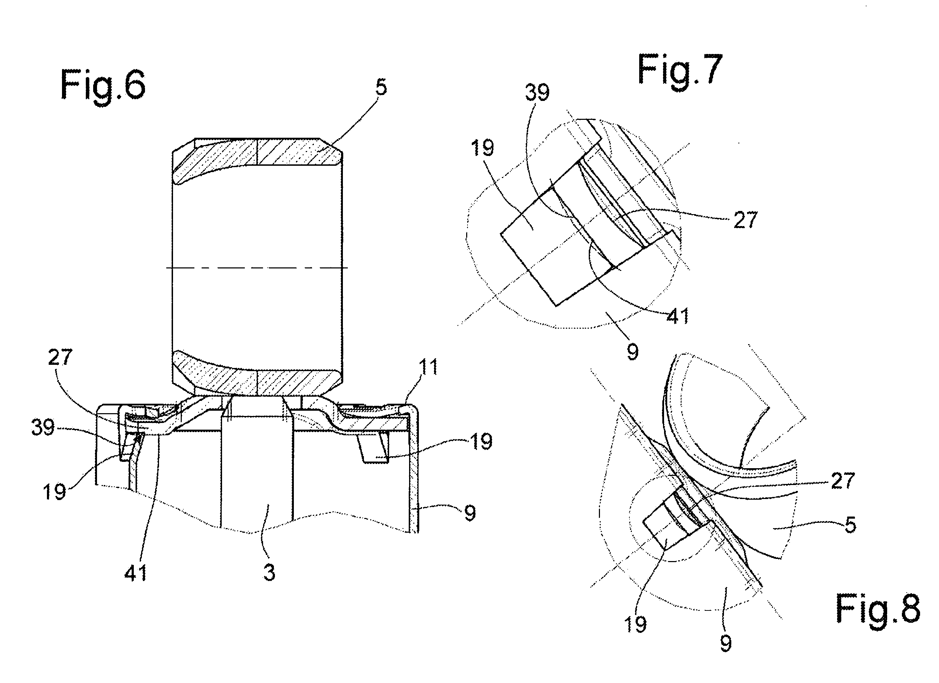

Ausgehend von der Montagestartposition wird der Kolbenstangenschutz 7 um die Längsachse der Kolbenstange 3 verdreht, bis sich die Draufsicht gemäß Fig. 5 einstellt, bei der die zungenförmigen Bereiche 17 in die Rücksprünge 37 der Tragscheibe 23 eingreifen, wie die Fig. 4 zeigt. Mit der Verdrehbewegung werden Anlageflächen 39 auf den Spannhaken 19 mit dem Wellenprofil 27 in axialer Überdeckung mit einer Unterseite 41 der Tragscheibe 23 gebracht, siehe Figuren 6 bis 8, wobei die Spannhaken 19 verformt werden, so dass eine spielfreie Verspannung zwischen der Oberseite 21 der Tragscheibe 23 mit der Innenseite des Bodens bzw. dem Spannhaken 19 mit der Unterseite 41 der Tragscheibe vorliegt.

In der nun vorliegenden Verriegelungsposition liegen die Seitenkanten des zungenförmigen Bereichs 17 zumindest nahezu spielfrei an der kegelstumpfförmigen Profilierung 29 der Tragscheibe 23 an. Der Boden 11 verdeckt dabei die Aussparungen 25 innerhalb der Tragscheibe 23, so dass kein Schmutz über den Boden 11 in das Innere des Kolbenstangenschutzes eindringen kann und die Fenster 1 9a oberhalb der Spannhaken 19 werden vom Rand der Tragscheibe 23 verschlossen.

## Patentansprüche

1. Kolben-Zylinderaggregat (1), umfassend eine Kolbenstange (3) mit einem Anschlussorgan (5), wobei an der Kolbenstange (3) eine Tragscheibe (23) mit einer Ober- und einer Unterseite (21; 41) befestigt ist, auf der ein Boden (11) eines Kolbenstangenschutzes (7) anliegt, wobei der Boden (11) eine Durchgangsöffnung (13) aufweist, die gewährleistet, dass der Kolbenstangenschutz (7) auch bei bereits an der Kolbenstange (3) vorhandenem Anschlussorgan (5) montierbar ist, wobei der Kolbenstangenschutz (7) durch eine rotatorische Verriegelungsbewegung an der Tragscheibe (23) fixierbar ist,
**dadurch gekennzeichnet,**
**dass** die Tragscheibe (23) zwischen der Ober- und Unterseite (21; 41) ein Wellenprofil (27) aufweist, so dass der Kolbenstangenschutz (7) über die Innenseite des Bodens (11) mit auf der Oberseite (21) und mit mindestens einer in Richtung der Unterseite (41) der Tragscheibe (23) weisende Anlagefläche (39) verspannt wird.

2. Kolben-Zylinderaggregat nach Anspruch 1,
**dadurch gekennzeichnet,**
**dass** die Anlagefläche (39) auf mindestens einem Spannhaken (19) ausgeführt ist.

3. Kolben-Zylinderaggregat nach Anspruch 2,
**dadurch gekennzeichnet,**
**dass** ein äußerer Rand der Tragscheibe (23) mit mindestens einer Aussparung (25) zur Aufnahme eines Spannhakens (19) der Kolbenstangenschutzeinrichtung (7) ausgeführt ist.

4. Kolben-Zylinderaggregat nach Anspruch 1
**dadurch gekennzeichnet,**
**dass** der Boden (11) mindestens einen in Radialrichtung der Kolbenstangenschutzeinrichtung freigeschnittenen zungenförmigen Bereich (17) aufweist, der mit einem Verriegelungsprofil (29) der Tragscheibe (23) zusammenwirkt.

5. Kolben-Zylinderaggregat nach Anspruch 4,
**dadurch gekennzeichnet,**
**dass** das Verriegelungsprofil (29) eine Montagestartposition und in einer dazu in Umfangsrichtung versetzten Winkelstellung eine Verriegelungsposition für den zungenförmigen Bereich (17) aufweist.

6. Kolben-Zylinderaggregat nach Anspruch 5,
**dadurch gekennzeichnet,**
**dass** das Verriegelungsprofil (29) im Bereich der Montagestartposition in Umfangsrichtung spielbehaftet ausgeführt ist.

7. Kolben-Zylinderaggregat nach Anspruch 5,
**dadurch gekennzeichnet,**
**dass** das Verriegelungsprofil (29) eine äußere mäanderförmig verlaufende Grundlinie (31) aufweist.

8. Kolben-Zylinderaggregat nach Anspruch 6,
**dadurch gekennzeichnet,**
**dass** das Verriegelungsprofil (29) von der Grundlinie (31) kegelstumpfförmig in Richtung des Anschlussorgans (5) ausgeführt ist.

9. Kolben-Zylinderaggregat nach Anspruch 8,
**dadurch gekennzeichnet,**
**dass** die Tragscheibe (23) im Bereich einer oberen Deckfläche (33) des Kegelstumpfes mit dem Anschlussorgan (5) verbunden ist.

## Claims

1. Piston-cylinder assembly (1), comprising a piston rod (3) with an attachment element (5), wherein a support disc (23) with a top and a bottom side (21; 41) is fastened to the piston rod (3), against which support disc bears a base (11) of a piston rod protector (7), wherein the base (11) has a through opening (13) which ensures that the piston rod protector (7) can be mounted even when the attachment element (5) is already present on the piston rod (3), wherein the piston rod protector (7) can be fixed to the support disc (23) by means of a rotational locking movement,
**characterized**
**in that** the support disc (23) has, between the top and bottom sides (21; 41), an undulating profile (27) such that the piston rod protector (7) is braced via the inner side of the base (11) with the top side (21) and with at least one contact surface (39) which points in the direction of the underside (41) of the support disc (23).

2. Piston-cylinder assembly according to Claim 1,
**characterized**
**in that** the contact surface (39) is formed on at least one clamping hook (19).

3. Piston-cylinder assembly according to Claim 2,
**characterized**
**in that** an outer edge of the support disc (23) is formed with at least one cutout (25) for receiving a clamping hook (19) of the piston rod protecting device (7).

4. Piston-cylinder assembly according to Claim 1,
**characterized**
**in that** the base (11) has at least one tongue-like region (17) which is cut free in the radial direction of the piston rod protecting device and which interacts with a locking profile (29) of the support disc (23).

5. Piston-cylinder assembly according to Claim 4,
**characterized**
**in that** the locking profile (29) has a mounting start position and, in an angular position offset with respect thereto in the circumferential direction, a locking position for the tongue-like region (17).

6. Piston-cylinder assembly according to Claim 5,
**characterized**
**in that** the locking profile (29) is formed so as to exhibit play in the circumferential direction in the region of the mounting start position.

7. Piston-cylinder assembly according to Claim 5,
**characterized in that** the locking profile (29) has an outer base line (31) which runs in a meandering fashion.

8. Piston-cylinder assembly according to Claim 6,
**characterized**
**in that** the locking profile (29) is formed in the manner of a truncated cone from the base line (31) in the direction of the attachment element (5).

9. Piston-cylinder assembly according to Claim 8,
**characterized**
**in that** the support disc (23) is connected to the attachment element (5) in the region of a top surface (33) of the truncated cone.

## Revendications

1. Ensemble cylindre-piston (1), comportant une tige de piston (3) dotée d'un organe de raccordement (5), un disque porteur (23) doté d'un côté supérieur et d'un côté inférieur (21 ; 41) étant fixé à la tige de piston (3), un fond (11) d'une protection de tige de piston (7) s'appliquant sur ce disque porteur, le fond (11) comprenant une ouverture traversante (13) qui garantit que la protection de tige de piston (7) puisse être montée même lorsqu'un organe de raccordement (5) est déjà présent sur la tige de piston (3), la protection de tige de piston (7) pouvant être fixée au disque porteur (23) par un mouvement de verrouillage rotatif,
**caractérisé**
**en ce que** le disque porteur (23) présente un profil ondulé (27) entre le côté supérieur et le côté inférieur (21 ; 41), de telle sorte que la protection de tige de piston (7) soit serrée sur le côté intérieur du fond (11) par l'intermédiaire du côté supérieur (21) et par l'intermédiaire d'au moins une surface d'appui (39) orientée dans la direction du côté inférieur (41) du disque porteur (23).

2. Ensemble cylindre-piston selon la revendication 1,
**caractérisé**
**en ce que** la surface d'appui (39) est réalisée sur au moins un crochet de serrage (19).

3. Ensemble cylindre-piston selon la revendication 2,
**caractérisé**
**en ce qu'**un bord extérieur du disque porteur (23) est réalisé avec au moins un évidement (25) pour la réception d'un crochet de serrage (19) du dispositif de protection de tige de piston (7).

4. Ensemble cylindre-piston selon la revendication 1,
**caractérisé**
**en ce que** le fond (11) comprend au moins une région (17) en forme de languette dégagée par découpage dans la direction radiale du dispositif de protection de tige de piston, laquelle région coopère avec un profil de verrouillage (29) du disque porteur (23).

5. Ensemble cylindre-piston selon la revendication 4,
**caractérisé**
**en ce que** le profil de verrouillage (29) comprend une position initiale de montage et une position de verrouillage, dans une position angulaire décalée dans la direction périphérique par rapport à cette position initiale de montage, pour la région (17) en forme de languette.

6. Ensemble cylindre-piston selon la revendication 5,
**caractérisé**
**en ce que** le profil de verrouillage (29), dans la région de la position initiale de montage, est réalisé avec un jeu dans la direction périphérique.

7. Ensemble cylindre-piston selon la revendication 5,
**caractérisé**
**en ce que** le profil de verrouillage (29) comprend une ligne de base (31) extérieure s'étendant en forme de méandres.

8. Ensemble cylindre-piston selon la revendication 6,
**caractérisé**
**en ce que** le profil de verrouillage (29) est réalisé sous forme tronconique à partir de la ligne de base (31) dans la direction de l'organe de raccordement (5).

9. Ensemble cylindre-piston selon la revendication 8,
**caractérisé**
**en ce que** le disque porteur (23) est relié à l'organe de raccordement (5) dans la région d'une surface de recouvrement (33) supérieure du tronc de cône.
